(19) Europäisches Patentamt
European Patent Office
Office européen des brevets

(11) **EP 4 542 436 A1**

(12) **EUROPEAN PATENT APPLICATION**
published in accordance with Art. 153(4) EPC

(43) Date of publication:
**23.04.2025 Bulletin 2025/17**

(21) Application number: 23834641.5

(22) Date of filing: **25.06.2023**

(51) International Patent Classification (IPC):
**G06F 30/27** (2020.01)   **G06F 30/398** (2020.01)

(86) International application number:
**PCT/CN2023/102122**

(87) International publication number:
**WO 2024/007867 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 CN 202210806637**

(71) Applicant: Huawei Technologies Co., Ltd.
Shenzhen, Guangdong 518129 (CN)

(72) Inventors:
• **HU, Shoubo**
Shenzhen, Guangdong 518129 (CN)

• **CHEN, Zhitang**
Shenzhen, Guangdong 518129 (CN)
• **ZHANG, Xiaopeng**
Shenzhen, Guangdong 518129 (CN)
• **ZHU, Shengyu**
Shenzhen, Guangdong 518129 (CN)
• **LI, Pengyun**
Shenzhen, Guangdong 518129 (CN)
• **MIAO, Jianxin**
Shenzhen, Guangdong 518129 (CN)
• **HUANG, Yu**
Shenzhen, Guangdong 518129 (CN)

(74) Representative: **Maiwald GmbH**
**Engineering**
**Elisenhof**
**Elisenstrasse 3**
**80335 München (DE)**

(54) **DEFECT ROOT CAUSE DETERMINATION METHOD AND APPARATUS, AND STORAGE MEDIUM**

(57)    This application relates to a method and an apparatus for determining a root-cause defect, and a storage medium. The method includes: obtaining a layout of a chip and diagnosis information of a defect in the chip; determining first feature information based on the layout and the diagnosis information, where the first feature information includes feature information respectively corresponding to a manufacturing defect and a design defect; and determining, based on the first feature information by using a neural network model, a defect that is a root cause from the manufacturing defect and the design defect. In embodiments of this application, both a design defect and a manufacturing defect of a chip can be considered, so that inference for a root cause is more comprehensive. In addition, an interaction relationship between complex root causes can be considered, so that a root-cause defect determined through inference is more accurate. In this way, assistance can be better provided in subsequent improvement of a chip-related design or a manufacturing technique, to reduce an increase in costs caused by a low yield rate.

```
                                                    ┌─ S201
Obtain a layout of a chip and diagnosis information of a defect in the chip

                              │

                                                    ┌─ S202
Determine first feature information based on the layout and the diagnosis
information

                              │

                                                    ┌─ S203
Determine, based on the first feature information by using a neural network model, a
defect that is a root cause from a manufacturing defect and a design defect
```

FIG. 2

EP 4 542 436 A1

## Description

This application claims priority to Chinese Patent Application No. 202210806637.4, filed with the China National Intellectual Property Administration on July 8, 2022 and entitled "METHOD AND APPARATUS FOR DETERMINING ROOT-CAUSE DEFECT, AND STORAGE MEDIUM", which is incorporated herein by reference in its entirety.

## TECHNICAL FIELD

This application relates to the field of artificial intelligence technologies, and in particular, to a method and an apparatus for determining a root-cause defect, and a storage medium.

## BACKGROUND

With development of functions of electronic products and expansion of application fields, a chip, as a core component of an electronic product, becomes an indispensable part of people's life. Chip production is mainly divided into two parts: layout designing and manufacturing. The layout designing usually includes multilayer circuit function designing. The manufacturing includes production, packaging, testing, and other processes. When different manufacturing techniques are used in a same chip design, some normal circuit structures of the chip design in an original technique may have a defect, leading to a chip yield rate lower than an expected value. Such a circuit structure that is prone to a defect due to a technique change is referred to as a design defect. In a same chip manufacturing process, a manufacturing step that frequently causes chip failures in different layout designs is referred to as a manufacturing defect.

A possibility of a function failure of an integrated circuit increases due to the design defect and the manufacturing defect. A chip with a circuit function failure cannot be properly used, leading to a decrease in a chip yield rate. Production costs increase due to the decrease in the yield rate, and a related product may even miss a sales window period. Therefore, to meet a requirement for gradually shortening a go-to-market cycle of a chip, how to find, in a timely manner, a root-cause defect that causes a decrease in a chip yield rate, to maintain a stable high chip yield rate and reduce chip production costs has become a key problem to be resolved.

In view of this, a method and an apparatus for determining a root-cause defect, and a storage medium are provided.

According to a first aspect, an embodiment of this application provides a method for determining a root-cause defect. The method includes:

obtaining a layout of a chip and diagnosis information of a defect in the chip;

determining first feature information based on the layout and the diagnosis information, where the first feature information includes feature information respectively corresponding to a manufacturing defect and a design defect; and

determining, based on the first feature information by using a neural network model, a defect that is a root cause from the manufacturing defect and the design defect.

According to this embodiment of this application, the layout and the diagnosis information of the chip are obtained, and the feature information respectively corresponding to the manufacturing defect and the design defect is determined, so that both the design defect and the manufacturing defect of the chip can be considered, and inference for a root cause is more comprehensive. A root-cause defect that causes a decrease in a chip yield rate is inferred by using the neural network model, so that an interaction relationship between complex root causes can be considered, and a root-cause defect determined through inference is more accurate. In this way, assistance can be better provided in subsequent improvement of a chip-related design or a manufacturing technique, to reduce an increase in costs caused by a low yield rate.

According to the first aspect, in a first possible implementation of the method for determining a root-cause defect, the determining, based on the first feature information by using a neural network model, a defect that is a root cause from the manufacturing defect and the design defect includes:

determining a probability distribution of the manufacturing defect and the design defect based on the first feature information by using the neural network model; and

determining, based on the probability distribution of the manufacturing defect and the design defect, a defect that is a root cause from the manufacturing defect and the design defect.

According to this embodiment of this application, the probability distribution of the manufacturing defect and the design defect is determined by using the neural network model, and a root cause is determined from the defects based on the probability distribution, so that a root-cause defect determined through inference can be more accurate.

According to the first aspect or the first possible implementation of the first aspect, in a second possible implementation of the method for determining a root-cause defect, the determining, based on the first feature information by using a neural network model, a defect that is a root cause from the manufacturing defect and the design defect may include:

determining second feature information based on the first feature information by using the neural network model, where the second feature information indicates the probability distribution of the manufacturing defect and the design defect; and

determining, based on the second feature information by using the neural network model, a defect that is a root cause from the manufacturing defect and the design defect.

According to this embodiment of this application, the second feature information is determined by using the neural network model, and a defect that is a root cause can be efficiently and accurately determined from the defects based on the probability distribution of the manufacturing defect and the design defect that is indicated by the second feature information. In this process, complex interaction between different defects can be considered, to determine a root cause of a decrease in a chip yield rate.

According to the second possible implementation of the first aspect, in a third possible implementation of the method for determining a root-cause defect, the second feature information indicates the probability distribution of the manufacturing defect and the design defect in the chip, and the determining, based on the second feature information by using the neural network model, a defect that is a root cause from the manufacturing defect and the design defect includes:

determining, based on the second feature information by using the neural network model, a probability distribution of the manufacturing defect and the design defect in all chips of a current batch; and

determining, based on the probability distribution of the manufacturing defect and the design defect in all the chips of the current batch, a defect that is a root cause from the manufacturing defect and the design defect.

According to this embodiment of this application, the probability distribution of the manufacturing defect and the design defect in all the chips are determined based on a probability distribution of the manufacturing defect and the design defect in each chip, so that an overall root cause of failures of the chips of the current batch can be obtained from the manufacturing defect and the design defect. In this way, assistance can be better provided in subsequent improvement of a chip-related design or a manufacturing technique, to reduce an increase in costs caused by a low yield rate.

According to the second or the third possible implementation of the first aspect, in a fourth possible implementation of the method for determining a root-cause defect, the second feature information is optimized second feature information, the neural network model may be a latent variable model, and the determining second feature information based on the first feature information by using the neural network model may include:

inputting the first feature information to an encoder of the latent variable model to determine initial second feature information;

inputting the initial second feature information to a decoder of the latent variable model to determine third feature information;

calculating, based on the initial second feature information, a first loss function value corresponding to the encoder;

calculating, based on the third feature information, a second loss function value corresponding to the decoder;

optimizing the latent variable model based on the first loss function value and the second loss function value to determine an optimized latent variable model; and

determining the optimized second feature information based on the optimized latent variable model.

According to this embodiment of this application, the initial second feature information is determined by using the encoder, so that global association between defects in failed chips of the current batch can be considered. In addition, the third feature information is obtained by using the decoder, so that local association between defects in a same chip can be considered. In this way, the encoder and the decoder of the latent variable model are collaboratively optimized, so that complex interaction between a design defect and a manufacturing defect can be comprehensively considered, and a root-cause defect that causes a decrease in a chip yield rate is more accurately determined.

According to the fourth possible implementation of the first aspect, in a fifth possible implementation of the method for determining a root-cause defect, the third feature information is reconstructed second feature information, and indicates an association relationship between different defects in a same chip.

According to this embodiment of this application, the second feature information is reconstructed to obtain the third feature information, so that the third feature information can be used to constrain the second feature information, and local association between defects in a same chip can be better learned by using the association relationship between different defects in a same chip that is indicated by the third feature information.

According to the fourth or the fifth possible implementation of the first aspect, in a sixth possible implementation of the method for determining a root-cause defect, a feature value in the third feature information may be 0 or 1.

According to this embodiment of this application, the feature value in the third feature information is a binarized value, so that the decoder can better learn local association between a design defect and a manufacturing defect in each failed chip, to more accurately determine a root-cause defect that causes a decrease in a chip yield rate.

According to the fourth, the fifth, or the sixth possible implementation of the first aspect, in a seventh possible implementation of the method for determining a root-cause defect, the encoder may be configured to construct a multivariate Gaussian distribution or a multivariate t distribution.

According to this embodiment of this application, a multivariate distribution is constructed in the encoder, so that a multivariate distribution of real root-cause defects can be obtained through modeling by using each candidate root-cause defect as an observable variable. In this process, global association between a design defect and a manufacturing defect in failed chips of one batch can be considered, so that a root cause inference result is more accurate.

According to the fourth, the fifth, the sixth, or the seventh possible implementation of the first aspect, in an eighth possible implementation of the method for determining a root-cause defect, a structure of the decoder may be any one of the following: a multilayer perceptron, a graph convolutional neural network, or a graph attention network.

According to this embodiment of this application, in the decoder, a distribution of real root-cause defects in latent variable space may be remapped to an observable variable by using a graph network structure, to constrain a root cause distribution in the latent variable space and avoiding overfitting. In this process, local association between a design defect and a manufacturing defect in each failed chip can be considered, so that a root cause inference result is more accurate.

According to the first aspect or the first, the second, the third, the fourth, the fifth, the sixth, the seventh, or the eighth possible implementation of the first aspect, in a ninth possible implementation of the method for determining a root-cause defect, the diagnosis information may include first diagnosis information corresponding to the design defect, and the determining first feature information based on the layout and the diagnosis information may include:

> determining a layout segment in the layout based on the layout and the diagnosis information, where the layout segment corresponds to a location of the design defect;
> clustering equivalent layout segments in the layout segment to determine an equivalence class; and
> determining, based on first diagnosis information corresponding to the equivalence class, feature information that is in the first feature information and that corresponds to the design defect.

According to this embodiment of this application, the equivalent layout segments in the layout are clustered to determine the equivalence class, so that the first diagnosis information can be integrated to remove redundant diagnosis information of the design defect. In this way, the determined feature information that is in the first feature information and that corresponds to the design defect is more concise, and a root-cause defect can be subsequently determined from the design defect and the manufacturing defect more accurately and efficiently.

According to the ninth possible implementation of the first aspect, in a tenth possible implementation of the method for determining a root-cause defect, the equivalence may include at least one of rotation equivalence, mirror equivalence, and translation equivalence between layout segments.

According to this embodiment of this application, rotation-equivalent, mirror-equivalent, or translation-equivalent layout segments are clustered, so that redundant information in the first diagnosis information can be more comprehensively determined, and the determined first feature information is more concise. This improves efficiency and accuracy of subsequent inference for a root cause.

According to the first aspect or the first, the second, the third, the fourth, the fifth, the sixth, the seventh, the eighth, the ninth, or the tenth possible implementation of the first aspect, in an eleventh possible implementation of the method for determining a root-cause defect, the diagnosis information may include second diagnosis information corresponding to the manufacturing defect, and the determining first feature information based on the layout and the diagnosis information may include:

determining, based on the second diagnosis information, feature information that is in the first feature information and that corresponds to the manufacturing defect.

According to this embodiment of this application, the feature information corresponding to the manufacturing defect is determined by using the diagnosis information corresponding to the manufacturing defect, so that more targeted inference can be implemented during subsequent determining of a root cause.

According to a second aspect, an embodiment of this application provides an apparatus for determining a root-cause defect. The apparatus includes:

> an obtaining module, configured to obtain a layout of a chip and diagnosis information of a defect in the chip;

a first determining module, configured to determine first feature information based on the layout and the diagnosis information, where the first feature information includes feature information respectively corresponding to a manufacturing defect and a design defect; and
a second determining module, configured to determine, based on the first feature information by using a neural network model, a defect that is a root cause from the manufacturing defect and the design defect.

According to the second aspect, in a first possible implementation of the apparatus for determining a root-cause defect, the second determining module may be configured to:

determine a probability distribution of the manufacturing defect and the design defect based on the first feature information by using the neural network model; and
determine, based on the probability distribution of the manufacturing defect and the design defect, a defect that is a root cause from the manufacturing defect and the design defect.

According to the second aspect or the first possible implementation of the second aspect, in a second possible implementation of the apparatus for determining a root-cause defect, the second determining module may be configured to:

determine second feature information based on the first feature information by using the neural network model, where the second feature information indicates the probability distribution of the manufacturing defect and the design defect; and
determine, based on the second feature information by using the neural network model, a defect that is a root cause from the manufacturing defect and the design defect.

According to the second possible implementation of the second aspect, in a third possible implementation of the apparatus for determining a root-cause defect, the second feature information indicates the probability distribution of the manufacturing defect and the design defect in the chip, and the determining, based on the second feature information by using the neural network model, a defect that is a root cause from the manufacturing defect and the design defect includes:

determining, based on the second feature information by using the neural network model, a probability distribution of the manufacturing defect and the design defect in all chips of a current batch; and
determining, based on the probability distribution of the manufacturing defect and the design defect in all the chips of the current batch, a defect that is a root cause from the manufacturing defect and the design defect.

According to the second or the third possible implementation of the second aspect, in a fourth possible implementation of the apparatus for determining a root-cause defect, the second feature information is optimized second feature information, the neural network model may be a latent variable model, and the determining second feature information based on the first feature information by using the neural network model may include:

inputting the first feature information to an encoder of the latent variable model to determine initial second feature information;
inputting the initial second feature information to a decoder of the latent variable model to determine third feature information;
calculating, based on the initial second feature information, a first loss function value corresponding to the encoder;
calculating, based on the third feature information, a second loss function value corresponding to the decoder;
optimizing the latent variable model based on the first loss function value and the second loss function value to determine an optimized latent variable model; and
determining the optimized second feature information based on the optimized latent variable model.

According to the fourth possible implementation of the second aspect, in a fifth possible implementation of the apparatus for determining a root-cause defect, the third feature information is reconstructed second feature information, and indicates an association relationship between different defects in a same chip.
According to the fourth or the fifth possible implementation of the second aspect, in a sixth possible implementation of the apparatus for determining a root-cause defect, a feature value in the third feature information may be 0 or 1.
According to the fourth, the fifth, or the sixth possible implementation of the second aspect, in a seventh possible implementation of the apparatus for determining a root-cause defect, the encoder may be configured to construct a multivariate Gaussian distribution or a multivariate t distribution.
According to the fourth, the fifth, the sixth, or the seventh possible implementation of the second aspect, in an eighth possible implementation of the apparatus for determining a root-cause defect, a structure of the decoder may be any one of the following: a multilayer perceptron, a graph convolutional neural network, or a graph attention network.

According to the second aspect or the first, the second, the third, the fourth, the fifth, the sixth, the seventh, or the eighth possible implementation of the second aspect, in a ninth possible implementation of the apparatus for determining a root-cause defect, the diagnosis information may include first diagnosis information corresponding to the design defect, and the first determining module may be configured to:

determine a layout segment in the layout based on the layout and the diagnosis information, where the layout segment corresponds to a location of the design defect;

cluster equivalent layout segments in the layout segment to determine an equivalence class; and

determine, based on first diagnosis information corresponding to the equivalence class, feature information that is in the first feature information and that corresponds to the design defect.

According to the ninth possible implementation of the second aspect, in a tenth possible implementation of the apparatus for determining a root-cause defect, the equivalence may include at least one of rotation equivalence, mirror equivalence, and translation equivalence between layout segments.

According to the second aspect or the first, the second, the third, the fourth, the fifth, the sixth, the seventh, the eighth, the ninth, or the tenth possible implementation of the second aspect, in an eleventh possible implementation of the apparatus for determining a root-cause defect, the diagnosis information may include second diagnosis information corresponding to the manufacturing defect, and the first determining module may be configured to:

determine, based on the second diagnosis information, feature information that is in the first feature information and that corresponds to the manufacturing defect.

According to a third aspect, an embodiment of this application provides an apparatus for determining a root-cause defect. The apparatus includes a processor and a memory for storing processor-executable instructions. The processor is configured to: when executing the instructions, implement the method for determining a root-cause defect according to one or more of the first aspect or the plurality of possible implementations of the first aspect.

According to a fourth aspect, an embodiment of this application provides a nonvolatile computer-readable storage medium. The nonvolatile computer-readable storage medium stores computer program instructions. When the computer program instructions are executed by a processor, the method for determining a root-cause defect according to one or more of the first aspect or the plurality of possible implementations of the first aspect is implemented.

According to a fifth aspect, an embodiment of this application provides a terminal device. The terminal device may perform the method for determining a root-cause defect according to one or more of the first aspect or the plurality of possible implementations of the first aspect.

According to a sixth aspect, an embodiment of this application provides a computer program product. The computer program product includes computer-readable code or a nonvolatile computer-readable storage medium carrying computer-readable code. When the computer-readable code is run on an electronic device, a processor in the electronic device performs the method for determining a root-cause defect according to one or more of the first aspect or the plurality of possible implementations of the first aspect.

These aspects and other aspects of this application are clearer and easier to understand in descriptions of the following (a plurality of) embodiments.

## BRIEF DESCRIPTION OF DRAWINGS

Accompanying drawings included in this specification as a part of this specification, together with this specification, show example embodiments, features, and aspects of this application, and are intended to explain principles of this application.

FIG. 1 is a diagram of an application scenario according to an embodiment of this application;

FIG. 2 is a flowchart of a method for determining a root-cause defect according to an embodiment of this application;

FIG. 3 is a flowchart of a method for determining a root-cause defect according to an embodiment of this application;

FIG. 4 is a diagram of layout segments according to an embodiment of this application;

FIG. 5 is a diagram of clustering layout segments according to an embodiment of this application;

FIG. 6 is a flowchart of a method for determining a root-cause defect according to an embodiment of this application;

FIG. 7 is a diagram of an architecture of a latent variable model according to an embodiment of this application;

FIG. 8 is a diagram of a structure of an apparatus for determining a root-cause defect according to an embodiment of this application; and

FIG. 9 is a diagram of a structure of an electronic device 900 according to an embodiment of this application.

**DESCRIPTION OF EMBODIMENTS**

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "being used as an example, embodiment, or illustration". Any embodiment described as an "example" herein is not necessarily construed as being superior to or better than other embodiments.

In addition, to better describe this application, many specific details are given in the following specific implementations. A person skilled in the art should understand that this application can also be implemented without some specific details. In some examples, methods, means, elements, and circuits that are well-known to a person skilled in the art are not described in detail, so that the subject matter of this application is highlighted.

With development of functions of electronic products and expansion of application fields, a chip, as a core component of an electronic product, becomes an indispensable part of people's life. Chip production is mainly divided into two parts: layout designing and manufacturing. The layout designing usually includes multilayer circuit function designing. The manufacturing includes production, packaging, testing, and other processes. When different manufacturing techniques are used in a same chip design, some normal circuit structures of the chip design in an original technique may have a defect, leading to a chip yield rate lower than an expected value. Such a circuit structure that is prone to a defect due to a technique change is referred to as a design defect. In a same chip manufacturing process, a manufacturing step that frequently causes chip failures in different layout designs is referred to as a manufacturing defect.

A possibility of a function failure of an integrated circuit increases due to the design defect and the manufacturing defect. A chip with a circuit function failure cannot be properly used, leading to a decrease in a chip yield rate. The chip yield rate is a ratio of a quantity of chips that pass a test to a quantity of effective chips on an entire wafer after all technique steps are completed. Production costs increase due to the decrease in the yield rate, and a related product may even miss a sales window period. Therefore, to meet a requirement for gradually shortening a go-to-market cycle of a chip, how to find, in a timely manner, a root-cause defect that causes a decrease in a chip yield rate from massive defects, to maintain a stable high chip yield rate and reduce chip production costs has become a key problem to be resolved.

In view of this, this application provides a method for determining a root-cause defect. In the method, a layout and a fault diagnosis report of a chip may be obtained, related information about a design defect and a manufacturing defect of the chip is analyzed, and a root-cause defect that causes a decrease in a chip yield rate is inferred by using a neural network model. In this way, assistance can be provided in subsequent improvement of a chip-related design or a manufacturing technique, to reduce an increase in costs caused by a low yield rate.

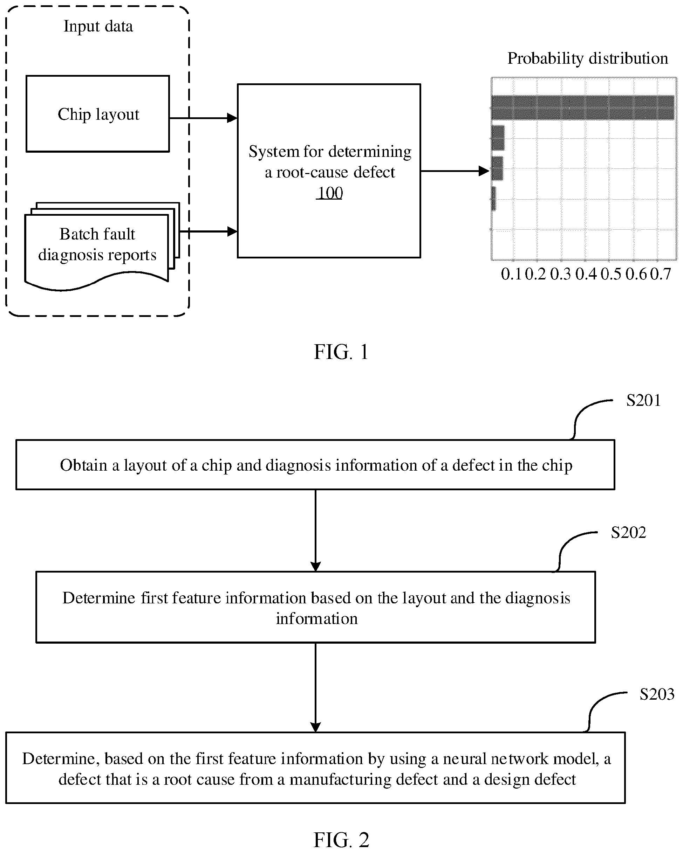

FIG. 1 is a diagram of an application scenario according to an embodiment of this application. As shown in FIG. 1, a system 100 for determining a root-cause defect in this embodiment of this application may be integrated, as a set of software system, into software used by a user for chip designing and yield rate analysis, and the software may be deployed on a terminal device or a server.

In an application scenario, when a batch of chips includes a predetermined quantity of chips whose yield rates are lower than a predetermined threshold, for the chips whose yield rates are lower than the threshold (which may be referred to as failed chips) in the batch, a root-cause defect that causes an excessively low chip yield rate may be determined by using the system for determining a root-cause defect in this embodiment of this application. As shown in FIG. 1, a layout of this batch of chips and batch fault diagnosis reports of failed chips among this batch of chips may be input. Each fault diagnosis report may include related information about each candidate root-cause defect in a corresponding failed chip. The system for determining a root-cause defect in this embodiment of this application may analyze related information about a chip design defect and a manufacturing defect in the layout and the batch fault diagnosis reports, to determine a real root-cause defect that causes a decrease in a chip yield rate from the design defect and the manufacturing defect. A probability distribution of candidate root-cause defects (including a design defect and/or a manufacturing defect) may be determined. To be specific, a probability that each defect is a real root cause (for example, a probability value corresponding to each defect in a horizontal bar graph in FIG. 1) is determined. In this way, a real root-cause defect that causes a decrease in a chip yield rate is determined based on the probability distribution, to provide assistance in subsequent improvement of a design or a manufacturing technique related to this type of chip. For example, if it is determined that the root-cause defect that causes the decrease in the chip yield rate is a manufacturing defect, for example, a short-circuit phenomenon of a chip in a manufacturing step, the corresponding manufacturing step may be modified at a specific short-circuit location. For another example, if it is determined that the root-cause defect that causes the decrease in the chip yield rate is a design defect, for example, an open-circuit design in a layout design of a chip, a corresponding design technique may be modified.

The terminal device in this application may be a device with a wireless connection function. The wireless connection function means that the terminal device may be connected to another terminal device or a server in a wireless connection mode such as Wi-Fi or Bluetooth. The terminal device in this application may also have a function of performing communication through a wired connection. The terminal device in this application may be a touchscreen device, a non-touchscreen device, or a device without a screen. When the terminal device is a touchscreen device, the terminal device may be controlled through tapping, sliding, or the like on a display screen by using a finger, a stylus, or the like. The non-touchscreen device may be connected to an input device such as a mouse, a keyboard, or a touch panel, and the terminal device is controlled by using the input device. The device without a screen may be, for example, a Bluetooth speaker without a screen. For example, the terminal device in this application may be a smartphone, a netbook, a tablet computer, a notebook computer, a wearable electronic device (for example, a smart band or a smartwatch), a TV, a virtual reality device, a speaker, or an electronic ink. For example, the system 100 for determining a root-cause defect in this application may be deployed on a terminal device, and a user may input data (a layout and batch fault diagnosis reports) to the terminal device, to determine, by using the system 100 for determining a root-cause defect in this application, a defect that is a root cause from a manufacturing defect and a design defect.

The server in this application may be deployed in a cloud or locally, may be a physical device or a virtual device such as a virtual machine or a container, and has a wireless communication function. The wireless communication function may be configured on a chip (system) or another component or assembly of the server. The server may be a device with a wireless connection function. The wireless connection function means that the server may be connected to another server or a terminal device in a wireless connection mode such as Wi-Fi or Bluetooth. The server in this application may also have a function of performing communication through a wired connection. For example, the server in this application may be deployed in a cloud, communicate with the terminal device, receive data (the layout and the batch fault diagnosis reports) sent by the terminal device, determine, by using the system 100 for determining a root-cause defect that is deployed on the server, a defect that is a root cause from a manufacturing defect and a design defect, and return an inference result to the terminal device.

It should be noted that the method for determining a root-cause defect in embodiments of this application may also be applied to an application scenario other than the foregoing application scenario. This is not limited in this application.

The following describes in detail the method for determining a root-cause defect in embodiments of this application with reference to FIG. 2 to FIG. 7.

FIG. 2 is a flowchart of a method for determining a root-cause defect according to an embodiment of this application. The method may be applied to a terminal device or a server, for example, the system 100 for determining a root-cause defect. As shown in FIG. 2, the method includes the following steps.

Step S201: Obtain a layout of a chip and diagnosis information of a defect in the chip.

For example, when a yield rate of a batch of a predetermined quantity of chips is lower than a predetermined threshold, a layout and diagnosis information of this batch of chips may be obtained. The layout of the chip may be a planar geometric shape description of a physical status of an integrated circuit. For this batch of chips, this batch of chips may be manufactured based on a same layout. A corresponding fault diagnosis report may be generated for each chip with a defect in this batch. Each chip with a defect (which may also be referred to as a failure) may correspond to one fault diagnosis report. Each fault diagnosis report may include related statistics of a defect in a corresponding chip, for example, a location of the defect in the layout, a defect type, and a quantity of occurrences of the defect. These defects may include a design defect and a manufacturing defect that correspond to candidate root-cause defects. The diagnosis information may be obtained from fault diagnosis reports corresponding to this batch of chips, and may indicate statistics of each candidate root-cause defect.

Optionally, the diagnosis information may include first diagnosis information corresponding to the design defect. When a candidate root-cause defect is the design defect, the obtained first diagnosis information may be shown in Table 1. Table 1 shows an example of the first diagnosis information obtained from the fault diagnosis reports.

Table 1

| Identifier | Current quantity of occurrences | Total quantity of occurrences | Possibility of being a root-cause defect | Layer | Defect type | Coordinate location |
|---|---|---|---|---|---|---|
| 138238 | 1 | 780 | 90% | M1 | OPEN | <float> |

The identifier may be a number (for example, 138238) corresponding to the design defect. The current quantity of occurrences may indicate a quantity (for example, 1) of occurrences of the design defect in a current fault diagnosis report. The total quantity of occurrences may indicate a quantity (for example, 780) of occurrences of the design defect in all fault diagnosis reports of this batch. The possibility of being a root-cause defect may indicate a possibility (for example, 90%) that the design defect is a root-cause defect among all defects in the current fault diagnosis report. The layer may indicate a layer (for example, an M1 layer) of the chip at which the design defect is located. The defect type may indicate a type of the design defect (for example, 'OPEN' may indicate that the design defect is an open-circuit structure in the design, and 'SHORT' may indicate that the design defect is a short-circuit structure in the design). The coordinate location may indicate coordinates of the design defect at the layer, and the coordinates may be two-dimensional float (float) coordinates. Diagnosis information corresponding to the design defect may alternatively include a part of the statistics shown in Table 1, or include more information than that in Table 1.

Optionally, the diagnosis information may further include second diagnosis information corresponding to the manufacturing defect. When a candidate root-cause defect is the manufacturing defect, the obtained second diagnosis information may include: an identifier of the manufacturing defect, for example, a number of the manufacturing defect or a name of the manufacturing defect; an area of the manufacturing defect in a critical region, where the critical region may indicate a region in which a defect occurs in a corresponding chip; a possibility that the manufacturing defect is a root-cause defect among defects in the critical region; a yield rate analysis constant of the manufacturing defect, where the yield rate analysis constant may indicate a degree of commonness of the manufacturing defect in this type of chip; and the like.

The first diagnosis information and the second diagnosis information may be obtained based on the conventional technology. After the layout and the diagnosis information are obtained, design and manufacturing features of the chip may be comprehensively considered based on the layout and the diagnosis information to determine feature information respectively corresponding to the manufacturing defect and the design defect, so as to analyze a root-cause defect. Refer to the following descriptions.

Step S202: Determine first feature information based on the layout and the diagnosis information.

The first feature information may include feature information respectively corresponding to the manufacturing defect and the design defect.

For example, a feature vector corresponding to each manufacturing defect and design defect may be first determined. The feature vector may include one (for example, when the feature vector is a one-dimensional vector) or more (for example, when the feature vector is a multi-dimensional vector) feature values. The one or more feature values may indicate a possibility that the defect is a root cause in a current fault diagnosis report. For example, when the feature vector is a multi-dimensional vector, feature values in the multi-dimensional vector may indicate, from different dimensions, possibilities that the defect is a root cause in the current fault diagnosis report. For example, for a specific defect, feature values in a multi-dimensional vector corresponding to the defect may be determined based on information of different dimensions in the diagnosis information. Alternatively, a possibility that the defect is a root cause in the current fault diagnosis report may be indicated by a weighted average value of the feature values in the vector. The following describes step S202 by using an example in which a feature vector corresponding to each defect is a one-dimensional vector, to be specific, each defect corresponds to one feature value.

For example, for each fault diagnosis report, a corresponding vector $r^m$ may be first determined:

$$r^m = [r_1^m, \ldots, r_i^m, \ldots, r_d^m]^T \qquad \text{Formula (1)}$$

$m$ may indicate a number of the fault diagnosis report. $d$ may indicate a total quantity of defects in an $m^{\text{th}}$ fault diagnosis report. $r_i^m$ may indicate a feature value corresponding to an $i^{\text{th}}$ defect in the $m^{\text{th}}$ fault diagnosis report, where the feature value may be a positive real number, and a larger feature value may indicate a higher possibility that the defect is a root-cause defect. $r_i^m$ may indicate a feature value corresponding to a design defect, or a feature value corresponding to a manufacturing defect.

A feature value r corresponding to a manufacturing defect may be determined based on the second diagnosis information. For example, a corresponding feature value may be determined based on an area of the manufacturing defect in a critical region and a possibility that the manufacturing defect is a root-cause defect among defects in the critical region. A larger area of the manufacturing defect in the critical region and a higher possibility that the manufacturing defect is a root-cause defect in the critical region may indicate a larger determined feature value r. If each manufacturing defect corresponds to a multi-dimensional vector, for example, a two-dimensional vector, in a possible implementation, two feature values in the two-dimensional vector may be determined based on an area of the manufacturing defect in a critical region and a possibility that the manufacturing defect is a root-cause defect among defects in the critical region respectively.

A feature value r corresponding to a design defect may be determined based on the first diagnosis information. For example, the feature value r may be determined based on statistics such as a quantity of occurrences of the design defect in a current fault diagnosis report, a total quantity of occurrences, and a possibility of being a root-cause defect. A larger quantity of occurrences of the design defect in the current fault diagnosis report, a larger total quantity of occurrences, and a higher possibility, obtained through statistics collection, of being a root-cause defect may indicate a larger determined feature value $r$. If each design defect corresponds to a multi-dimensional vector, for example, a two-dimensional vector, in a possible implementation, one feature value in the two-dimensional vector may be determined based on a quantity of occurrences of the design defect in a current fault diagnosis report, and the other feature value in the two-dimensional vector is determined based on a total quantity of occurrences of the design defect and a possibility of being a root-cause defect.

After a feature value r corresponding to each defect is determined, feature information that is in the first feature information and that corresponds to each manufacturing defect and each design defect may be determined based on the feature value.

For a manufacturing defect, a feature value r (refer to the foregoing descriptions) corresponding to the manufacturing defect may be determined based on the second diagnosis information, and the feature value r is directly used as feature information that is in the first feature information and that corresponds to a corresponding manufacturing defect. Refer to the following descriptions.

During determining of feature information that is in the first feature information and that corresponds to each manufacturing defect, optionally, step S202 may include:

determining, based on the second diagnosis information, feature information that is in the first feature information and that corresponds to the manufacturing defect.

The feature information that is in the first feature information and that corresponds to the manufacturing defect may include the feature value r corresponding to the manufacturing defect.

According to this embodiment of this application, the feature information corresponding to the manufacturing defect is determined by using the diagnosis information corresponding to the manufacturing defect, so that more targeted inference can be implemented during subsequent determining of a root cause.

For a design defect, the layout may include equivalent duplicate layout segments. Therefore, a fault diagnosis report may include redundant diagnosis information of the design defect. Duplicate occurrences of the design defect may lead to a scattered root cause probability distribution during subsequent inference for a root cause, reducing inference accuracy. Therefore, during determining of feature information that is in the first feature information and that corresponds to each design defect, duplicate information in first diagnosis information corresponding to each fault diagnosis report may be first removed based on equivalent layout segments identified from the layout. Refer to the following descriptions.

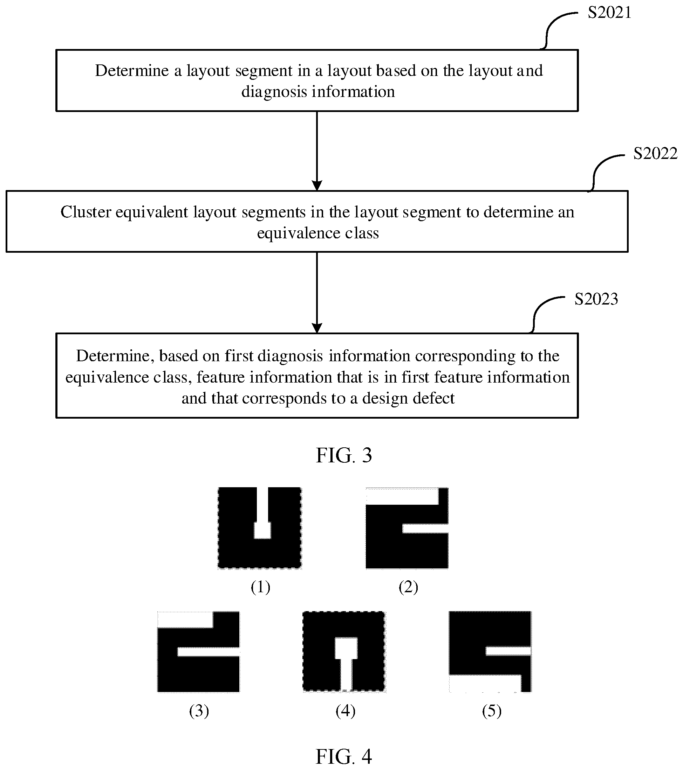

FIG. 3 is a flowchart of a method for determining a root-cause defect according to an embodiment of this application. As shown in FIG. 3, step S202 may include the following steps.

Step S2021: Determine a layout segment in the layout based on the layout and the diagnosis information.

There may be one or more layout segments, and the layout segments may respectively correspond to locations of design defects. For example, based on a layer and a coordinate location of a design defect in the first diagnosis information, a location of a corresponding design defect may be found in the layout, and a layout segment that corresponds to the location of the design defect and that has a predetermined area is obtained. A manner of determining a layout segment and a size of the layout segment are not limited in this application, provided that the layout segment can include a location of a design defect.

FIG. 4 is a diagram of layout segments according to an embodiment of this application. The example layout segments shown in FIG. 4 include equivalent layout segments. The equivalence may include at least one of rotation equivalence, mirror equivalence, and translation equivalence between layout segments. For example, in the figure, a layout segment (1) and a layout segment (4) are rotation (or mirror)-equivalent; and a layout segment (2), a layout segment (3), and a layout segment (5) are equivalent, where the layout segment (2) and the layout segment (3) are translation-equivalent, and the layout segment (2) and the layout segment (5) are mirror-equivalent. For a manner of determining equivalent layout segments among layout segments, refer to the following descriptions.

Step S2022: Cluster equivalent layout segments in the layout segment to determine an equivalence class.

For example, a convolutional neural network (convolutional neural network, CNN) model may act as an encoder to extract feature vectors of layout segments in feature space (to be specific, the layout segments are input to the CNN encoder, and a feature vector corresponding to each layout segment is output), and cluster the extracted feature vectors to determine an equivalence class between the layout segments.

The CNN model may extract a feature of a layout segment by using a feature extraction network such as a residual network (residual network, ResNET), an Xception model, or an inception model. The CNN model may be obtained through training by using a self-supervised policy of contrastive learning. During training, a loss function for contrastive learning may be used for optimization training. For example, a triplet loss (triplet loss) function or a normalized temperature-scaled cross entropy loss (the normalized temperature-scaled cross entropy loss, NT-Xent) function is used. Training data for training the CNN model may be generated by transforming, for example, rotating, mirroring, or translating, a layout segment.

A method for clustering the extracted feature vectors may be: performing clustering by using a clustering algorithm such as K-Means (k-means), K-Medoids (k-medoids), a Gaussian mixture model (gaussian mixture model), or density-based spatial clustering of applications with noise (density-based spatial clustering of applications with noise, DBSCAN), to obtain a layout segment and an equivalence class tag corresponding to the layout segment. In this way, an equivalence class between layout segments can be determined.

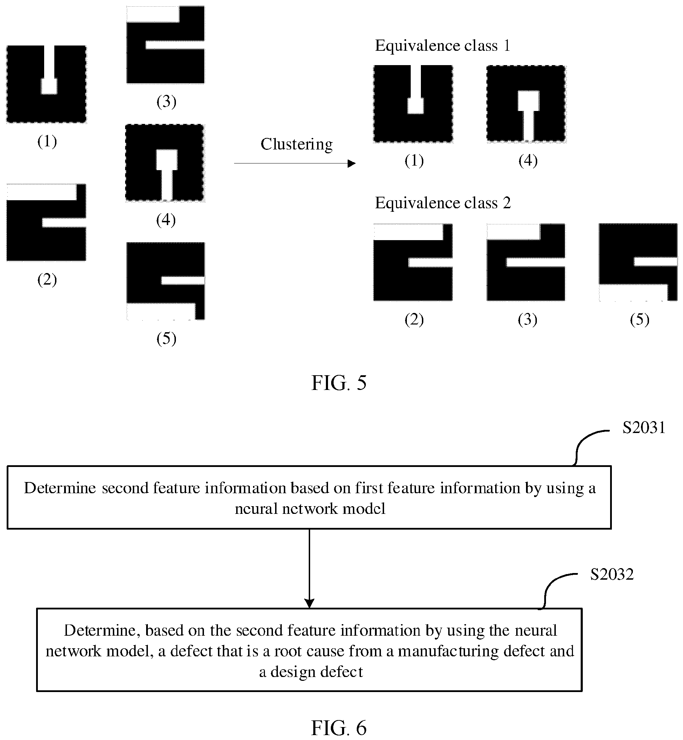

FIG. 5 is a diagram of clustering layout segments according to an embodiment of this application. As shown in FIG. 5, clustered layout segments may be classified into different equivalence classes.

For example, clustered layout segments (1) and (4) belong to the 1st equivalence class (for example, an equivalence class 1 in the figure), and clustered layout segments (2), (3), and (5) belong to the 2nd equivalence class (for example, an equivalence class 2 in the figure). Each equivalence class may correspond to a type of design defect.

Therefore, redundant first diagnosis information in a fault diagnosis report may be determined.

Step S2023: Determine, based on first diagnosis information corresponding to the equivalence class, feature information that is in the first feature information and that corresponds to the design defect.

For example, for a feature vector $r^m$ corresponding to each fault diagnosis report, for one equivalence class, a predetermined quantity (for example, 1) of feature values r among feature values of one or more design defects corresponding to the equivalence class may be retained in $r^m$ based on an equivalence class tag of a layout segment, and other redundant feature values are removed. If feature values of a plurality of design defects corresponding to the equivalence class are different, a predetermined quantity of feature values may be determined from the feature values as retained feature values based on a preset condition or randomly. This is equivalent to removing redundant first diagnosis information from a corresponding fault diagnosis report. A feature value r that corresponds to the design defect and that remains after the redundant values are removed may be used as feature information that is in the first feature information and that corresponds to the design defect.

It should be noted that, alternatively, for one equivalence class, diagnosis information of a predetermined quantity (for example, 1) of design defects among one or more corresponding design defects is first retained in the first diagnosis information based on an equivalence class tag of a layout segment, and other redundant diagnosis information is removed; and then feature information that is in the first feature information and that corresponds to the design defect (a feature value corresponding to the design defect) is determined based on remaining first diagnosis information.

According to this embodiment of this application, the equivalent layout segments in the layout are clustered to determine the equivalence class, so that the first diagnosis information can be integrated to remove redundant diagnosis information of the design defect. In this way, the determined feature information that is in the first feature information and that corresponds to the design defect is more concise, and a root-cause defect can be subsequently determined from the design defect and the manufacturing defect more accurately and efficiently.

Still refer to FIG. 2. After the first feature information is determined, a root-cause defect may be inferred based on the first feature information by using a neural network model. Refer to the following descriptions.

Step S203: Determine, based on the first feature information by using a neural network model, a defect that is a root cause from the manufacturing defect and the design defect.

During inference by using the neural network model, different candidate root-cause defects may be modeled as different variables through input of the first feature information, instead of inputting a same variable to the neural network model. In this way, interaction between complex root causes can be considered, to more accurately determine a defect that is a root cause from the manufacturing defect and the design defect. The first feature information determined in the foregoing steps may be expressed as the following vector $x^n$:

$$x^n = \left[x_1^n, ..., x_j^n, ..., x_k^n\right]^T \qquad \text{Formula (2)}$$

$n$ may indicate a number of a corresponding fault diagnosis report, and a value of $n$ may range from 1 to N, where N is a total quantity of fault diagnosis reports (or may be a total quantity of failed chips). $j$ may be a number of a corresponding defect. $k$ may indicate a total quantity of manufacturing defects and design defects corresponding to the fault diagnosis report $n$. $x_j^n$ may indicate a feature vector (which may be a one-dimensional or multi-dimensional vector, as described above) corresponding to a $j^{th}$ defect in the fault diagnosis report n, and may correspond to one candidate root-cause defect.

According to this embodiment of this application, the layout and the diagnosis information of the chip are obtained, and the feature information respectively corresponding to the manufacturing defect and the design defect is determined, so that both the design defect and the manufacturing defect of the chip can be considered, and inference for a root cause is more comprehensive. A root-cause defect that causes a decrease in a chip yield rate is inferred by using the neural network model, so that an interaction relationship between complex root causes can be considered, and a root-cause defect determined through inference is more accurate. In this way, assistance can be better provided in subsequent improvement of a chip-related design or a manufacturing technique, to reduce an increase in costs caused by a low yield rate.

Optionally, step S203 may further include:
determining a probability distribution of the manufacturing defect and the design defect based on the first feature information by using the neural network model.

To be specific, the neural network model may output a defect, of the manufacturing defect and the design defect, that is a root cause, or may output the probability distribution of the manufacturing defect and the design defect. After the probability distribution of the manufacturing defect and the design defect is determined, a defect that is a root cause may be determined from the manufacturing defect and the design defect based on the probability distribution.

Optionally, the neural network model may be a latent variable model. For a process of determining, based on the first feature information by using the latent variable model, a defect that is a root cause from the manufacturing defect and the design defect, refer to the following descriptions.

FIG. 6 is a flowchart of a method for determining a root-cause defect according to an embodiment of this application. As shown in FIG. 6, step S203 may include the following steps.

Step S2031: Determine second feature information based on the first feature information by using the neural network model.

The first feature information may include the vector $x^n$ (which may be referred to as an observable variable). A corresponding feature vector $x^n$ may be determined for each fault diagnosis report. The first feature information may include N feature vectors (N is a total quantity of fault diagnosis reports). Each feature vector included in each feature vector $x^n$ may correspond to a defect indicated in the fault diagnosis report. To be specific, each defect may act as a variable input to the neural network model.

The second feature information may be a feature representation (to be specific, a latent variable feature vector in the latent variable model) corresponding to input $x^n$. The second feature information may indicate the probability distribution of the manufacturing defect and the design defect. In this way, a real root cause of a chip defect can be inferred from the manufacturing defect and the design defect based on the probability distribution. N pieces of second feature information may be determined based on N pieces of first feature information.

Different defects are constructed as different variables, and corresponding first feature information is input to the neural network model to determine a defect that is a root cause from the manufacturing defect and the design defect. In this way, a complex relationship between different defects can be considered, so that a root-cause defect can be more accurately inferred.

The second feature information may be optimized second feature information. For a manner of determining the optimized second feature information, refer to the following descriptions. Step S2031 may include:

inputting the first feature information to an encoder of the latent variable model to determine initial second feature information.

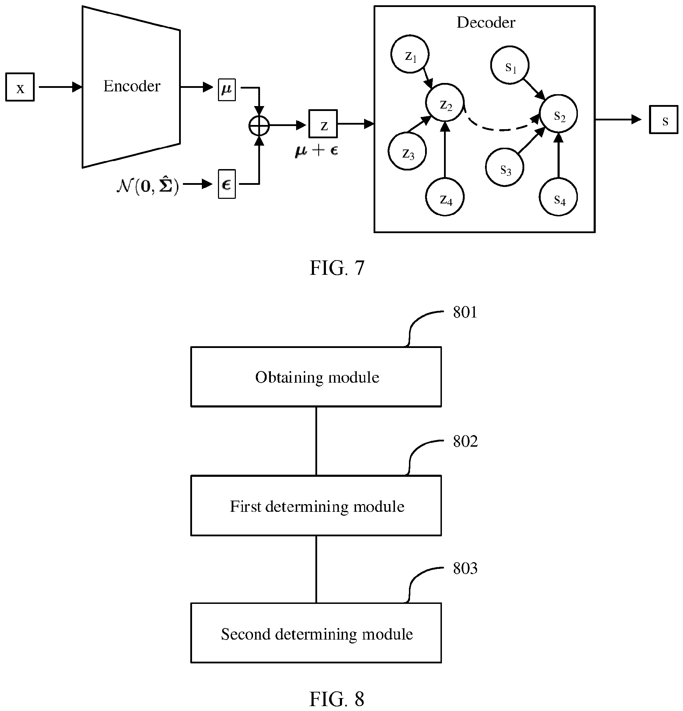

FIG. 7 is a diagram of an architecture of a latent variable model according to an embodiment of this application.

The first feature information may be indicated by x in the figure, and may correspond to the vector $x^n$. The second feature information may be indicated by z in the figure, and may correspond to a latent variable feature vector $z^n$. Each feature vector in $z^n$ may correspond to (for example, in a one-to-one correspondence with) an observable variable $x^n$. Each feature vector in $z^n$ may indicate a possibility that a corresponding defect in a fault diagnosis report n (namely, an $n^{th}$ failed chip) determined by the latent variable model is a root cause among all defects.

For an encoder of the latent variable model, refer to an encoder in FIG. 7. Global association between a design defect and a manufacturing defect among all defects of this batch of failed chips may be considered by using the encoder, to establish a mapping relationship between an observable variable and a latent variable. Optionally, the encoder may be configured to construct a multivariate Gaussian distribution or a multivariate t distribution.

For example, as shown in FIG. 7, the following multivariate Gaussian distribution may be established by using the encoder, to learn the global association between the design defect and the manufacturing defect:

$$z \sim \mathrm{N}(\mu_z, \epsilon_z) \qquad\qquad \text{Formula (3)}$$

$\mu_z$ and $\varepsilon_z$ may indicate parameters of the multivariate Gaussian distribution. $\varepsilon_z$ may conform to the following Gaussian distribution:

$$\epsilon_z \sim \mathrm{N}\left(0, \widehat{\textstyle\sum}_{zz}\right) \qquad\qquad \text{Formula (4)}$$

$\hat{\Sigma}_{zz}$ may indicate a covariance matrix of an observable variable x, and may be pre-calculated.

After a latent variable (namely, the initial second feature information) is determined, the latent variable may be input to a decoder of the latent variable model for feature reconstruction (feature reconstruction), to constrain a root cause distribution in latent variable space, avoid overfitting, and determine third feature information.

For the decoder, refer to a decoder in FIG. 7. The third feature information may indicate reconstructed second feature information. Refer to $s$ in the figure. Feature vectors in the third feature information $s$ may correspond to (for example, in a one-to-one correspondence with) latent variables z.

Optionally, a structure of the decoder may be any one of the following: a multilayer perceptron (multilayer perceptron), a graph convolutional neural network (graph convolutional network, GCN), or a graph attention network (graph attention network, GAT).

Therefore, local association between a design defect and a manufacturing defect in each failed chip can be considered, to establish a mapping relationship between a latent variable and $s$ (refer to an example mapping from $z_1$, $z_2$, $z_3$, and $z_4$ to $s_1$, $s_2$, $s_3$, and $s_4$ in the figure).

To better guide the model to learn local association between different defects, optionally, a feature value in the third feature information may be 0 or 1.

To be specific, a feature value in $s$ may be represented in a binary mode. A feature value of a corresponding defect in $s^n$ being 1 may indicate that the defect appears among defects corresponding to observable variables in the fault diagnosis report n. A feature value of a corresponding defect being 0 may indicate that the defect does not appear among defects corresponding to observable variables in the fault diagnosis report n.

During optimization of the latent variable model, the encoder and the decoder of the latent variable model may be collaboratively optimized. Refer to the following descriptions.

A first loss function value corresponding to the encoder may be calculated based on the initial second feature information, and a second loss function value corresponding to the decoder is calculated based on the third feature information.

A total optimization objective corresponding to the latent variable model may be determined based on the first loss function and the second loss function (which may be referred to as a reconstructed loss function), and may be expressed as follows:

$$\min \ L_1 + \lambda L_2 \qquad\qquad \text{Formula (5)}$$

$L_1$ may indicate the first loss function corresponding to the encoder. $L_2$ may indicate the reconstructed loss function corresponding to the decoder. $\lambda$ may indicate a hyperparameter for balancing likelihood and reconstruction, and a value of $\lambda$ may be preset (for example, to 1). The two loss functions can be simultaneously minimized to collaboratively optimize the model.

For example, a value of the first loss function $L_1$ is calculated by using a log-likelihood loss (log-likelihood loss), and a value of the second loss function $L_2$ is calculated by using a binary cross entropy loss (binary cross entropy loss).

Therefore, the latent variable model may be optimized based on a first loss function value and a second loss function value to determine parameters of an encoder and a decoder of an optimized latent variable model, so as to determine the optimized latent variable model. The optimized second feature information may be determined based on the optimized latent variable model.

Because an optimized decoder may be determined after the model is optimized, the optimized second feature information may be determined based on the first feature information by using the optimized decoder.

According to this embodiment of this application, the initial second feature information is determined by using the encoder, so that global association between defects in failed chips of the current batch can be considered. In addition, the first feature information is reconstructed by using the decoder to obtain the third feature information, so that local association between defects in a same chip can be considered. In this way, the encoder and the decoder of the latent variable model are collaboratively optimized, so that complex interaction between a design defect and a manufacturing defect can be comprehensively considered, and a root-cause defect that causes a decrease in a chip yield rate is more accurately determined.

Still refer to FIG. 6. In step S2032, a defect that is a root cause is determined from each manufacturing defect and design defect based on the second feature information by using the neural network model.

The second feature information may indicate a probability distribution of a manufacturing defect and a design defect in a chip. For example, the neural network model may first normalize the N fault diagnosis reports based on $z^n$ by using a softmax function to obtain N probability distributions corresponding to the N fault diagnosis reports. In this way, a probability distribution corresponding to a manufacturing defect and a design defect in each failed chip can be determined.

When feature vectors corresponding to a manufacturing defect and a design defect in a feature vector $z^n$ are multi-dimensional vectors, the multi-dimensional vectors each may be first converted into a one-dimensional vector (for example, an average value of feature values in the multi-dimensional vector is used as a feature value in the one-dimensional vector), and then converted $z^n$ is normalized. Alternatively, the feature vector $z^n$ may be first normalized to obtain N probability distributions $\tilde{z}^n$ corresponding to N normalized fault diagnosis reports, and then a multi-dimensional vector corresponding to each defect in the N probability distributions $\tilde{z}^n$ is converted into a one-dimensional vector (for example, a sum of probability values in the multi-dimensional vector is used as a probability value in the one-dimensional vector).

A probability distribution corresponding to all defects in the current batch may be determined based on a probability distribution corresponding to each failed chip (for example, for the probability distribution corresponding to all the defects in the current batch, refer to the horizontal bar graph in FIG. 1). Probability distributions corresponding to failed chips of the current batch may be averaged to obtain the probability distribution corresponding to all the defects in the current batch.

$$p(c_k) = \frac{1}{N} \sum_n^N \tilde{z}^n \qquad \text{Formula (6)}$$

$p(c_k)$ may indicate the probability distribution corresponding to all the defects in the current batch. $\tilde{z}^n$ may indicate a normalized feature vector $z^n$. If a feature vector corresponding to each defect in $z^n$ is a multi-dimensional vector, $\tilde{z}^n$ may indicate a converted probability distribution in which a vector corresponding to each defect is a one-dimensional vector. If a fault diagnosis report does not include the feature vector $z^n$, in other words, does not include this type of defect, $z^n$ of second feature information corresponding to the fault diagnosis report is 0 in the formula (6). In this probability distribution, a probability value corresponding to a defect being 0.5 may indicate that 50% of N failed chips of the current batch fail due to the defect. A larger quantity of chips that fail due to a defect may indicate a higher possibility that a corresponding defect is a real root-cause defect.

A defect that is a root cause may be determined from a manufacturing defect and a design defect based on probability distributions of the manufacturing defect and the design defect in all failed chips of the current batch.

In a case with a single root cause, a defect corresponding to a largest probability value may be a root cause. In a case with a plurality of root causes (for example, k root causes), defects corresponding to k largest probability values may be root causes.

Table 2 shows accuracy of inferring a real root-cause defect in a case with a single root cause and without noise error data according to an embodiment of this application.

Table 2

| Layout design | Conventional commercial tool | | This application | |
|---|---|---|---|---|
| | Root-cause manufacturing defect | Root-cause design defect | Root-cause manufacturing defect | Root-cause design defect |
| Layout design 1 | 77.00% | 84.62% | 85.00% | 94.87% |
| Layout design 2 | 88.36% | 92.52% | 97.88% | 94.30% |

Two different layout designs are as examples in Table 2. In the conventional commercial tool, for the 1st layout design (the layout design 1), accuracy of inferring a root-cause manufacturing defect is 77%, and accuracy of inferring a root-cause design defect is 84.62%; and for the 2nd layout design (the layout design 2), accuracy of inferring a root-cause manufacturing defect is 88.36%, and accuracy of inferring a root-cause design defect is 92.52%. In comparison, in this application, for the 1st layout design (the layout design 1), accuracy of inferring a root-cause manufacturing defect is 85.00%, and accuracy of inferring a root-cause design defect is 94.87%; and for the 2nd layout design (the layout design 2), accuracy of inferring a root-cause manufacturing defect is 97.88%, and accuracy of inferring a root-cause design defect is 94.30%.

Table 3 shows accuracy of inferring a real root-cause defect in a case with a single root cause and with noise error data according to an embodiment of this application.

Table 3

| Layout design | Conventional commercial tool | | This application | |
|---|---|---|---|---|
| | Root-cause manufacturing defect | Root-cause design defect | Root-cause manufacturing defect | Root-cause design defect |
| Layout design 1 | 41.35% | 57.55% | 66.35% | 71.13% |
| Layout design 2 | 74.57% | 82.62% | 87.50% | 83.49% |

Two different layout designs are as examples in Table 3. In the conventional commercial tool, for the 1st layout design (the layout design 1), accuracy of inferring a root-cause manufacturing defect is 41.35%, and accuracy of inferring a root-cause design defect is 57.55%; and for the 2nd layout design (the layout design 2), accuracy of inferring a root-cause manufacturing defect is 74.57%, and accuracy of inferring a root-cause design defect is 82.62%. In comparison, in this

application, for the 1st layout design (the layout design 1), accuracy of inferring a root-cause manufacturing defect is 66.35%, and accuracy of inferring a root-cause design defect is 71.13%; and for the 2nd layout design (the layout design 2), accuracy of inferring a root-cause manufacturing defect is 87.50%, and accuracy of inferring a root-cause design defect is 83.49%.

It can be learned from Table 2 and Table 3 that, in a case with a single root cause, the accuracy of inferring a root-cause design defect in the two different layout designs in this application reaches a level equivalent to and higher than a level in the conventional commercial tool, and the accuracy of inferring a root-cause manufacturing defect is significantly improved compared with the accuracy in the conventional commercial tool, where the improvement exceeds 5% in the different layout designs.

Table 4 shows accuracy and an average error of inferring a real root-cause defect in a case with a plurality of root causes and with noise error data according to an embodiment of this application.

Table 4

| Layout design | Conventional commercial tool | | | | This application | | | |
|---|---|---|---|---|---|---|---|---|
| | hit3 | wame | hit2 | hit1 | hit3 | wame | hit2 | hit1 |
| Layout design 1 | 1.14% | 0.2689 | 24.56% | 80.63% | 30.82% | 0.1259 | 83.76% | 99.10% |
| Layout design 2 | 37.97% | 0.1918 | 83.02% | 97.89% | 62.45% | 0.0830 | 94.32% | 99.48% |

As shown in Table 4, the hit1, the hit2, and the hit3 may indicate accuracy in a case in which one, two, and three root-cause defects are hit respectively when there are a plurality of root causes, and wame may indicate a weighted mean absolute error (weighted mean absolute error) corresponding to the hit1, the hit2, and the hit3. Two different layout designs are used as examples. In the conventional commercial tool, for the 1st layout design (the layout design 1), the hit1 accuracy (accuracy) is 80.63%, the hit2 accuracy is 24.56%, the hit3 accuracy is 1.14%, and the wame is 0.2689; and for the 2nd layout design (the layout design 2), the hit1 accuracy is 97.89%, the hit2 accuracy is 83.02%, the hit3 accuracy is 37.97%, and the wame is 0.1918. In comparison, in this application, for the 1st layout design (the layout design 1), the hit1 accuracy is 99.10%, the hit2 accuracy is 83.76%, the hit3 accuracy is 30.82%, and the wame is 0.1259; and for the 2nd layout design (the layout design 2), the hit1 accuracy is 99.48%, the hit2 accuracy is 94.32%, the hit3 accuracy is 62.45%, and the wame is 0.0830.

It can be learned from Table 4 that, in a case with a plurality of root causes, the accuracy of inferring a root-cause defect in the two different layout designs in this application exceeds the accuracy in the conventional commercial tool, and the wame is optimized by more than 20% compared with the wame in the conventional commercial tool. It can be learned that an inference result for a probability distribution in which each defect is a root cause in this application is more accurate.

FIG. 8 is a diagram of a structure of an apparatus for determining a root-cause defect according to an embodiment of this application. The apparatus may be used in the foregoing terminal device or server, for example, the system 100 for determining a root-cause defect. As shown in FIG. 8, the apparatus includes:

an obtaining module 801, configured to obtain a layout of a chip and diagnosis information of a defect in the chip;

a first determining module 802, configured to determine first feature information based on the layout and the diagnosis information, where the first feature information includes feature information respectively corresponding to a manufacturing defect and a design defect; and

a second determining module 803, configured to determine, based on the first feature information by using a neural network model, a defect that is a root cause from the manufacturing defect and the design defect.

According to this embodiment of this application, the layout and the diagnosis information of the chip are obtained, and the feature information respectively corresponding to the manufacturing defect and the design defect is determined, so that both the design defect and the manufacturing defect of the chip can be considered, and inference for a root cause is more comprehensive. A root-cause defect that causes a decrease in a chip yield rate is inferred by using the neural network model, so that an interaction relationship between complex root causes can be considered, and a root-cause defect determined through inference is more accurate. In this way, assistance can be better provided in subsequent improvement of a chip-related design or a manufacturing technique, to reduce an increase in costs caused by a low yield rate.

Optionally, the diagnosis information may include first diagnosis information corresponding to the design defect, and the first determining module 802 may be configured to:

determine a layout segment in the layout based on the layout and the diagnosis information, where the layout segment corresponds to a location of the design defect;

cluster equivalent layout segments in the layout segment to determine an equivalence class; and
determine, based on first diagnosis information corresponding to the equivalence class, feature information that is in the first feature information and that corresponds to the design defect.

According to this embodiment of this application, the equivalent layout segments in the layout are clustered to determine the equivalence class, so that the first diagnosis information can be integrated to remove redundant diagnosis information of the design defect. In this way, the determined feature information that is in the first feature information and that corresponds to the design defect is more concise, and a root-cause defect can be subsequently determined from the design defect and the manufacturing defect more accurately and efficiently.

Optionally, the equivalence may include at least one of rotation equivalence, mirror equivalence, and translation equivalence between layout segments.

According to this embodiment of this application, rotation-equivalent, mirror-equivalent, or translation-equivalent layout segments are clustered, so that redundant information in the first diagnosis information can be more comprehensively determined, and the determined first feature information is more concise. This improves efficiency and accuracy of subsequent inference for a root cause.

Optionally, the diagnosis information may include second diagnosis information corresponding to the manufacturing defect, and the first determining module 802 may be configured to:
determine, based on the second diagnosis information, feature information that is in the first feature information and that corresponds to the manufacturing defect.

According to this embodiment of this application, the feature information corresponding to the manufacturing defect is determined by using the diagnosis information corresponding to the manufacturing defect, so that more targeted inference can be implemented during subsequent determining of a root cause.

Optionally, the second determining module 803 may be configured to:

determine a probability distribution of the manufacturing defect and the design defect based on the first feature information by using the neural network model; and
determine, based on the probability distribution of the manufacturing defect and the design defect, a defect that is a root cause from the manufacturing defect and the design defect.

According to this embodiment of this application, the probability distribution of the manufacturing defect and the design defect is determined by using the neural network model, and a root cause is determined from the defects based on the probability distribution, so that a root-cause defect determined through inference can be more accurate.

Optionally, the second determining module 803 may be configured to:

determine second feature information based on the first feature information by using the neural network model, where the second feature information indicates the probability distribution of the manufacturing defect and the design defect; and
determine, based on the second feature information by using the neural network model, a defect that is a root cause from the manufacturing defect and the design defect.

According to this embodiment of this application, the second feature information is determined by using the neural network model, and a defect that is a root cause can be efficiently and accurately determined from the defects based on the probability distribution of the manufacturing defect and the design defect that is indicated by the second feature information. In this process, complex interaction between different defects can be considered, to determine a root-cause defect that causes a decrease in a chip yield rate.

Optionally, the second feature information indicates the probability distribution of the manufacturing defect and the design defect in the chip, and the determining, based on the second feature information by using the neural network model, a defect that is a root cause from the manufacturing defect and the design defect includes:

determining, based on the second feature information by using the neural network model, a probability distribution of the manufacturing defect and the design defect in all chips of a current batch; and
determining, based on the probability distribution of the manufacturing defect and the design defect in all the chips of the current batch, a defect that is a root cause from the manufacturing defect and the design defect.

According to this embodiment of this application, the probability distribution of the manufacturing defect and the design defect in all the chips are determined based on a probability distribution of the manufacturing defect and the design defect in each chip, so that an overall root cause of failures of the chips of the current batch can be obtained from the manufacturing defect and the design defect. In this way, assistance can be better provided in subsequent improvement of a chip-related design or a manufacturing technique, to reduce an increase in costs caused by a low yield rate.

Optionally, the second feature information is optimized second feature information, the neural network model may be a latent variable model, and the determining second feature information based on the first feature information by using the neural network model may include:

inputting the first feature information to an encoder of the latent variable model to determine initial second feature information;

inputting the initial second feature information to a decoder of the latent variable model to determine third feature information;

calculating, based on the initial second feature information, a first loss function value corresponding to the encoder;

calculating, based on the third feature information, a second loss function value corresponding to the decoder;

optimizing the latent variable model based on the first loss function value and the second loss function value to determine an optimized latent variable model; and

determining the optimized second feature information based on the optimized latent variable model.

According to this embodiment of this application, the initial second feature information is determined by using the encoder, so that global association between defects in failed chips of the current batch can be considered. In addition, the third feature information is obtained by using the decoder, so that local association between defects in a same chip can be considered. In this way, the encoder and the decoder of the latent variable model are collaboratively optimized, so that complex interaction between a design defect and a manufacturing defect can be comprehensively considered, and a root-cause defect that causes a decrease in a chip yield rate is more accurately determined.

Optionally, the third feature information is reconstructed second feature information, and indicates an association relationship between different defects in a same chip.

According to this embodiment of this application, the second feature information is reconstructed to obtain the third feature information, so that the third feature information can be used to constrain the second feature information, and local association between defects in a same chip can be better learned by using the association relationship between different defects in a same chip that is indicated by the third feature information.

Optionally, a feature value in the third feature information may be 0 or 1.

According to this embodiment of this application, the feature value in the third feature information is a binarized value, so that the decoder can better learn local association between a design defect and a manufacturing defect in each failed chip, to more accurately determine a root-cause defect that causes a decrease in a chip yield rate.

Optionally, the encoder may be configured to construct a multivariate Gaussian distribution or a multivariate t distribution.

According to this embodiment of this application, a multivariate distribution is constructed in the encoder, so that a multivariate distribution of real root-cause defects can be obtained through modeling by using each candidate root-cause defect as an observable variable. In this process, global association between a design defect and a manufacturing defect in failed chips of one batch can be considered, so that a root cause inference result is more accurate.

Optionally, a structure of the decoder may be any one of the following: a multilayer perceptron, a graph convolutional neural network, or a graph attention network.

According to this embodiment of this application, in the decoder, a distribution of real root-cause defects in latent variable space may be remapped to an observable variable by using a graph network structure, to constrain a root cause distribution in the latent variable space and avoiding overfitting. In this process, local association between a root-cause design defect and a root-cause manufacturing defect in each failed chip can be considered, so that a root cause inference result is more accurate.

An embodiment of this application provides an apparatus for determining a root-cause defect, including a processor and a memory for storing processor-executable instructions. The processor is configured to implement the foregoing method when executing the instructions.

An embodiment of this application provides a terminal device. The terminal device may perform the method for determining a root-cause defect.

An embodiment of this application provides a nonvolatile computer-readable storage medium. The nonvolatile computer-readable storage medium stores computer program instructions. When the computer program instructions are executed by a processor, the foregoing method is implemented.

An embodiment of this application provides a computer program product, including computer-readable code or a nonvolatile computer-readable storage medium carrying computer-readable code. When the computer-readable code is run in a processor of an electronic device, the processor in the electronic device performs the foregoing method.

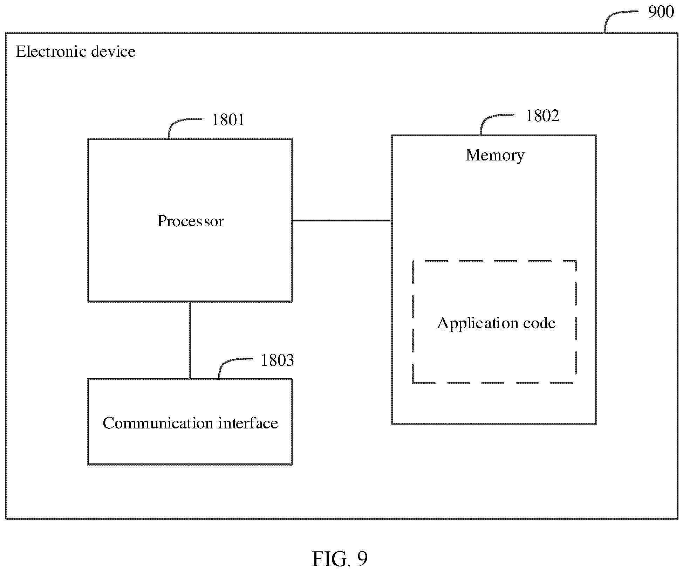

FIG. 9 is a diagram of a structure of an electronic device 900 according to an embodiment of this application. As shown in FIG. 9, the electronic device 900 may be the foregoing server or terminal device, and performs functions of the server or the terminal device in the method for determining a root-cause defect in any one of FIG. 2 to FIG. 7, or may be the system 100 for determining a root-cause defect. The electronic device 900 includes at least one processor 1801, at least one memory 1802, and at least one communication interface 1803. In addition, the electronic device may further include a general-purpose component such as an antenna. Details are not described herein.

The following describes components of the electronic device 900 in detail with reference to FIG. 9.

The processor 1801 may be a general-purpose central processing unit (CPU), a microprocessor, an application-specific integrated circuit (application-specific integrated circuit, ASIC), or one or more integrated circuits for controlling execution of programs for the foregoing solutions. The processor 1801 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The communication interface 1803 is configured to communicate with another electronic device or a communication network, for example, Ethernet, a radio access network (RAN), a core network, or a wireless local area network (Wireless Local Area Network, WLAN).

The memory 1802 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory may exist independently, and is connected to the processor through a bus. The memory may alternatively be integrated with the processor.

The memory 1802 is configured to store application code for performing the foregoing solutions, and the processor 1801 controls execution of the application code. The processor 1801 is configured to execute the application code stored in the memory 1802.

In the foregoing embodiments, the descriptions in the embodiments have respective focuses. For a part that is not described in detail in an embodiment, refer to related descriptions in other embodiments.

The computer-readable storage medium may be a tangible device capable of retaining and storing instructions to be used by an instruction execution device. For example, the computer-readable storage medium may be but is not limited to an electronic storage device, a magnetic storage device, an optical storage device, an electromagnetic storage device, a semiconductor storage device, or any suitable combination thereof. More specific examples (a non-exhaustive list) of the computer-readable storage medium include a portable computer disk, a hard disk, a random access memory (Random Access Memory, RAM), a read-only memory (Read-Only Memory, ROM), an erasable programmable read-only memory (Electrically Programmable Read-Only Memory, EPROM, or a flash memory), a static random access memory (Static Random Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punched card or a groove protrusion structure that stores instructions, and any suitable combination thereof.

The computer-readable program instructions or code described herein may be downloaded from the computer-readable storage medium to each computing/processing device or to an external computer or an external storage device through a network such as the Internet, a local area network, a wide area network, and/or a wireless network. The network may include a copper transmission cable, fiber-optic transmission, wireless transmission, a router, a firewall, a switch, a gateway computer, and/or an edge server. A network adapter card or a network interface in each computing/processing device receives the computer-readable program instructions from the network, and forwards the computer-readable program instructions for storage in a computer-readable storage medium in the computing/processing device.

The computer program instructions for performing operations in this application may be assembly instructions, instruction set architecture (Instruction Set Architecture, ISA) instructions, machine instructions, machine-related instructions, microcode, firmware instructions, status setting data, or source code or object code written in one programming language or any combination of a plurality of programming languages. The programming languages include an object-oriented programming language such as Smalltalk or C++, and a conventional procedural programming language such as a "C" language or a similar programming language. The computer-readable program instructions may be fully executed on a user computer, partially executed on a user computer, executed as a separate software package, partially executed on a user computer and partially executed on a remote computer, or fully executed on a remote computer or server. When a remote computer is used, the remote computer may be connected to a user computer through any type of network, including a local area network (Local Area Network, LAN) or a wide area network (Wide Area Network, WAN), or may be connected to an external computer (for example, connected through the Internet via an Internet service provider). In some embodiments, an electronic circuit, for example, a programmable logic circuit, a field programmable gate array (Field Programmable Gate Array, FPGA), or a programmable logic array (Programmable Logic Array, PLA), is customized by using status information of the computer-readable program instructions. The electronic circuit may execute the computer-readable program instructions to implement various aspects of this application.

Various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

The computer-readable program instructions may be provided for a processor of a general-purpose computer, a dedicated computer, or another programmable data processing apparatus to produce a machine. Therefore, when the instructions are executed by the processor of the computer or the another programmable data processing apparatus, an apparatus for implementing functions/actions specified in one or more blocks in the flowcharts and/or block diagrams is produced. The computer-readable program instructions may alternatively be stored in the computer-readable storage medium. The instructions enable a computer, a programmable data processing apparatus, and/or another device to operate in a specific manner. Therefore, the computer-readable medium storing the instructions includes an artifact that includes instructions for implementing various aspects of functions/actions specified in one or more blocks in the flowcharts and/or block diagrams.

The computer-readable program instructions may alternatively be loaded to a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, functions marked in blocks may alternatively be performed in a sequence different from that marked in the accompanying drawings. For example, two consecutive blocks may actually be performed substantially in parallel, or may sometimes be performed in a reverse order. This depends on a function to be implemented.

It should also be noted that each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, during implementation of the present invention that claims protection, a person skilled in the art may understand and implement another variation of the disclosed embodiments by viewing the accompanying drawings, disclosed content, and the appended claims. **In** the claims, "comprising" (comprising) does not exclude another component or step, and "a" or "an" does not exclude a case of more than one. A single processor or another unit may implement several functions enumerated in the claims. Some measures are recorded in dependent claims that are different from each other, but this does not mean that these measures cannot be combined to produce better effect.

Embodiments of this application are described above. The foregoing descriptions are examples but not exhaustive, and are not limited to the disclosed embodiments. Many modifications and variations are clear to a person of ordinary skill in the art without departing from the scope the described embodiments. Selection of terms used in this specification is intended to best explain principles and practical application of embodiments or improvements made to technologies on the market, or to enable a person of ordinary skill in the art to understand embodiments disclosed in this specification.

## Claims

1. A method for determining a root-cause defect, wherein the method comprises:

    obtaining a layout of a chip and diagnosis information of a defect in the chip;
    determining first feature information based on the layout and the diagnosis information, wherein the first feature information comprises feature information respectively corresponding to a manufacturing defect and a design defect; and
    determining, based on the first feature information by using a neural network model, a defect that is a root cause from the manufacturing defect and the design defect.

2. The method according to claim 1, wherein the determining, based on the first feature information by using a neural network model, a defect that is a root cause from the manufacturing defect and the design defect comprises:

determining second feature information based on the first feature information by using the neural network model, wherein the second feature information indicates a probability distribution of the manufacturing defect and the design defect; and
determining, based on the second feature information by using the neural network model, a defect that is a root cause from the manufacturing defect and the design defect.

3. The method according to claim 2, wherein the neural network model is a latent variable model, the second feature information is optimized second feature information, and the determining second feature information based on the first feature information by using the neural network model comprises:

inputting the first feature information to an encoder of the latent variable model to determine initial second feature information;
inputting the initial second feature information to a decoder of the latent variable model to determine third feature information;
calculating, based on the initial second feature information, a first loss function value corresponding to the encoder;
calculating, based on the third feature information, a second loss function value corresponding to the decoder;
optimizing the latent variable model based on the first loss function value and the second loss function value to determine an optimized latent variable model; and
determining the optimized second feature information based on the optimized latent variable model.

4. The method according to claim 3, wherein a feature value in the third feature information is 0 or 1.

5. The method according to claim 3 or 4, wherein the encoder is configured to construct a multivariate Gaussian distribution or a multivariate t distribution.

6. The method according to any one of claims 3 to 5, wherein a structure of the decoder is any one of the following: a multilayer perceptron, a graph convolutional neural network, or a graph attention network.

7. The method according to any one of claims 1 to 6, wherein the diagnosis information comprises first diagnosis information corresponding to the design defect, and the determining first feature information based on the layout and the diagnosis information comprises:

determining a layout segment in the layout based on the layout and the diagnosis information, wherein the layout segment corresponds to a location of the design defect;
clustering equivalent layout segments in the layout segment to determine an equivalence class; and
determining, based on first diagnosis information corresponding to the equivalence class, feature information that is in the first feature information and that corresponds to the design defect.

8. The method according to claim 7, wherein the equivalence comprises at least one of rotation equivalence, mirror equivalence, and translation equivalence between layout segments.

9. The method according to any one of claims 1 to 8, wherein the diagnosis information comprises second diagnosis information corresponding to the manufacturing defect, and the determining first feature information based on the layout and the diagnosis information comprises:
determining, based on the second diagnosis information, feature information that is in the first feature information and that corresponds to the manufacturing defect.

10. An apparatus for determining a root-cause defect, wherein the apparatus comprises:

an obtaining module, configured to obtain a layout of a chip and diagnosis information of a defect in the chip;
a first determining module, configured to determine first feature information based on the layout and the diagnosis information, wherein the first feature information comprises feature information respectively corresponding to a manufacturing defect and a design defect; and
a second determining module, configured to determine, based on the first feature information by using a neural network model, a defect that is a root cause from the manufacturing defect and the design defect.

11. The apparatus according to claim 10, wherein the second determining module is configured to:

determine second feature information based on the first feature information by using the neural network model, wherein the second feature information indicates a probability distribution of the manufacturing defect and the design defect; and
determine, based on the second feature information by using the neural network model, a defect that is a root cause from the manufacturing defect and the design defect.

12. The apparatus according to claim 11, wherein the neural network model is a latent variable model, the second feature information is optimized second feature information, and the determining second feature information based on the first feature information by using the neural network model comprises:

inputting the first feature information to an encoder of the latent variable model to determine initial second feature information;
inputting the initial second feature information to a decoder of the latent variable model to determine third feature information;
calculating, based on the initial second feature information, a first loss function value corresponding to the encoder;
calculating, based on the third feature information, a second loss function value corresponding to the decoder;
optimizing the latent variable model based on the first loss function value and the second loss function value to determine an optimized latent variable model; and
determining the optimized second feature information based on the optimized latent variable model.

13. The apparatus according to claim 12, wherein a feature value in the third feature information is 0 or 1.

14. An apparatus for determining a root-cause defect, comprising:

a processor; and
a memory for storing processor-executable instructions, wherein
the processor is configured to implement the method according to any one of claims 1 to 9 when executing the instructions.

15. A nonvolatile computer-readable storage medium, wherein the nonvolatile computer-readable storage medium stores computer program instructions, and when the computer program instructions are executed by a processor, the method according to any one of claims 1 to 9 is implemented.

16. A computer program product, comprising computer-readable code or a nonvolatile computer-readable storage medium carrying computer-readable code, wherein when the computer-readable code is run on an electronic device, a processor in the electronic device performs the method according to any one of claims 1 to 9.

Input data

Chip layout

Batch fault
diagnosis reports

System for determining
a root-cause defect
100

Probability distribution

0.1 0.2 0.3 0.4 0.5 0.6 0.7

FIG. 1

S201

Obtain a layout of a chip and diagnosis information of a defect in the chip

S202

Determine first feature information based on the layout and the diagnosis
information

S203

Determine, based on the first feature information by using a neural network model, a
defect that is a root cause from a manufacturing defect and a design defect

FIG. 2

S2021

Determine a layout segment in a layout based on the layout and diagnosis information

S2022

Cluster equivalent layout segments in the layout segment to determine an equivalence class

S2023

Determine, based on first diagnosis information corresponding to the equivalence class, feature information that is in first feature information and that corresponds to a design defect

FIG. 3

(1)          (2)

(3)          (4)          (5)

FIG. 4

Equivalence class 1

(1)    (4)

Equivalence class 2

(2)    (3)    (5)

Clustering

(1)

(2)

(3)

(4)

(5)

FIG. 5

S2031

Determine second feature information based on first feature information by using a neural network model

S2032

Determine, based on the second feature information by using the neural network model, a defect that is a root cause from a manufacturing defect and a design defect

FIG. 6

FIG. 7

FIG. 8

900

Electronic device

1801

Processor

1802

Memory

Application code

1803

Communication interface

FIG. 9

<table>
<tr><td colspan="2" align="center">**INTERNATIONAL SEARCH REPORT**</td><td colspan="2">International application No.<br><br>**PCT/CN2023/102122**</td></tr>
<tr><td colspan="4">**A.   CLASSIFICATION OF SUBJECT MATTER**<br>G06F30/27(2020.01)i；  G06F30/398(2020.01)i<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br>IPC:G06F</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>CNTXT, ENTXT, ENTXTC, DWPI, CNKI: 缺陷, 根因, 芯片, 神经网络, 诊断, 特征, 编码器, 损失函数, 优化, 模型, flaw, root cause, chip, neural network, diagnose, characteristic, encoder, loss function, optimize, model</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>X</td><td colspan="2">CN 113657022 A (HUAWEI TECHNOLOGIES CO., LTD.) 16 November 2021 (2021-11-16) description, paragraphs [0063]-[0211]</td><td>1-2, 6-11, 14-16</td></tr>
<tr><td>Y</td><td colspan="2">CN 113657022 A (HUAWEI TECHNOLOGIES CO., LTD.) 16 November 2021 (2021-11-16) description, paragraphs [0063]-[0211]</td><td>3-5, 12-13</td></tr>
<tr><td>Y</td><td colspan="2">CN 109918477 A (SOUTH CHINA UNIVERSITY OF TECHNOLOGY) 21 June 2019 (2019-06-21) description, paragraphs [0055]-[0094]</td><td>3-5, 12-13</td></tr>
<tr><td>A</td><td colspan="2">US 2011191725 A1 (OBERAI ANKUSH) 04 August 2011 (2011-08-04) entire document</td><td>1-16</td></tr>
<tr><td>PX</td><td colspan="2">CN 115238641 A (HUAWEI TECHNOLOGIES CO., LTD.) 25 October 2022 (2022-10-25) entire document</td><td>1-16</td></tr>
<tr><td colspan="2">☐ Further documents are listed in the continuation of Box C.</td><td colspan="2">☑ See patent family annex.</td></tr>
<tr><td colspan="2">*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed</td><td colspan="2">"T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family</td></tr>
<tr><td colspan="2">Date of the actual completion of the international search<br><br>**05 September 2023**</td><td colspan="2">Date of mailing of the international search report<br><br>**07 September 2023**</td></tr>
<tr><td colspan="2">Name and mailing address of the ISA/CN<br><br>**China National Intellectual Property Administration (ISA/CN)**<br>**China No. 6, Xitucheng Road, Jimenqiao, Haidian District, Beijing 100088**</td><td colspan="2">Authorized officer<br><br><br><br>Telephone No.</td></tr>
</table>

Form PCT/ISA/210 (second sheet) (July 2022)

**INTERNATIONAL SEARCH REPORT**
Information on patent family members

International application No.

**PCT/CN2023/102122**

| Patent document cited in search report | | | Publication date (day/month/year) | Patent family member(s) | | | Publication date (day/month/year) |
|---|---|---|---|---|---|---|---|
| CN | 113657022 | A | 16 November 2021 | None | | | |
| CN | 109918477 | A | 21 June 2019 | CN | 109918477 | B | 12 February 2021 |
| US | 2011191725 | A1 | 04 August 2011 | US | 8775979 | B2 | 08 July 2014 |
| CN | 115238641 | A | 25 October 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210806637